# EUROPEAN PATENT APPLICATION

(11) **EP 4 086 620 A1**
(43) Date of publication of application: **09.11.2022**
(21) Application number: 21172337.4
(22) Date of filing: 05.05.2021
(51) Int. Cl.: G01N 29/04, G01N 29/265, G01N 29/34, G01N 29/11

(54) **METHOD AND DEVICE FOR CHECKING THE WALL OF A PIPELINE FOR FLAWS**

(71) Applicant: NDT Global Corporate Ltd. Ireland, Dublin 9 (IE)
(72) Inventor: AANES, Magne, Dr., 76351 Bergen (NO); HAAS, Michael, Dr., 76351 Linkenheim-Hochstetten (DE); HENNIG, Thomas, Dr., 75045 Walzbachtal (DE)
(74) Representative: Global IP Europe Patentanwaltskanzlei

(57) **Abstract**

The present invention relates to a method for detecting a defect in a pipeline wall (14), comprising the steps of arranging a first ultrasonic transducer (10) and a second ultrasonic transducer (12) inside a pipeline, each at a finite stand-off distance d₁ from the pipeline wall (14), wherein the first and second transducers (10, 12) are arranged at a second distance d₂ from each other; emitting, by the first ultrasonic transducer (10), a first ultrasonic signal towards the pipeline wall (14) at a finite angle α relative to a normal of the pipeline wall (14), wherein the first ultrasonic signal excites at least one fundamental Lamb mode in the pipeline wall (14); and receiving, by the second ultrasonic transducer (12), a second ultrasonic signal from the surface of the pipeline wall (14), wherein the second ultrasonic signal is generated by the at least one fundamental Lamb mode excited by the first ultrasonic signal and having propagated within the pipeline wall (14) over a finite third distance d₃. The present invention further relates to an inspection devices configured to carry out this method.

## Description

### Technical field

The present invention relates to a method and a device for checking an object, especially the wall of a gas-filled pipeline for flaws.

### Background

Pipelines can be inspected non-destructively and in situ using so-called pigs carrying the inspection equipment including, e.g., piezoelectric ultrasonic transducers. The pressure-driven flow of the fluid in the pipeline to be inspected is used to push the pig along down the pipeline. As the pig travels through the pipeline, selected ones of the ultrasonic transducers pick up the inspection signals as a function of the distance covered. After or even during inspection, the inspections signals can be read and analysed.

Inspecting pipelines using ultrasound signals is well known. An ultrasound signal impinging on a pipeline wall will lead to the formation of standing and propagating elastic waves in the pipeline wall, including Rayleigh and Lamb waves. Lamb waves exhibit velocity dispersion, i.e., their velocity of propagation depends on the frequency (or wavelength) as well as on the elastic constants and density of the material. Lamb waves comprise symmetrical and antisymmetric zero-order (S0, A0) and higher-order (S1, A1 and higher) modes, wherein the zero-order (fundamental) modes exist over the entire frequency spectrum from zero to indefinitely high frequencies. By contrast, each higher-order mode exists only above a certain characteristic frequency.

In known detection methods, detecting defects in the pipeline wall using Lamb waves is based on the use of propagating higher-order Lamb modes (i.e., S1, A1 and higher modes). Ultra-wide band ultrasonic transducers with an angle of incidence of 0° are typically used to excite these Lamb modes. As the sound field of these sensors has contributions with wave vectors with orientations that deviate from 0°, not only standing waves are generated, but also propagating Lamb waves just above their cut-off frequency. The Lamb waves are guided waves, and due to the symmetry of the transmitter sensor set-up, the wave front of the Lamb waves has circular symmetry. In a known set up, several receiving sensors are arranged around a central transmitter and receive the transmitted Lamb waves. The detection principle is the following: if there is a crack located in the path of a propagating Lamb wave, the transmitted Lamb wave amplitude drops. The receiving sensors record this drop in received Lamb wave amplitude. This set-up is described in WO 2016/137335 A1.

However, other defect types such as corrosion and laminations can cause a drop in transmitted signal amplitude too. In addition, a change in sensor lift-off, angle of incidence, and boundary conditions can cause signal drops in the same order of magnitude.

Achieving and maintaining a good signal-to-noise ratio during inspection is therefore a significant challenge and it is an object of the present invention to provide a method for detecting flaws in an object such as a pipeline wall with higher accuracy and improved signal-to-noise ratio.

### Summary of the invention

A first aspect of the invention relates to a method for detecting a defect in a pipeline wall, comprising the steps of arranging a first ultrasonic transducer and a second ultrasonic transducer inside a pipeline, each at a finite stand-off distance d₁ from the pipeline wall, preferably in the direction of a normal of the pipeline wall, wherein the first and second transducers are arranged at a second distance d₂ from each other, preferably in a plane defined by the normal of the pipeline wall; emitting, by the first ultrasonic transducer, a first ultrasonic signal towards the pipeline wall at a finite angle α relative to the normal of the pipeline wall, wherein the first ultrasonic signal excites at least one fundamental Lamb mode in the pipeline wall; and receiving, by the second ultrasonic transducer, a second ultrasonic signal from the surface of the pipeline wall, wherein the second ultrasonic signal is generated by the at least one fundamental Lamb mode excited by the first ultrasonic signal and having propagated within the pipeline wall over a third, finite distance d₃.

This aspect is based on the surprising insight that in the known approach of using transducers with 0° angle of incidence, only a very small part (if any) of the sound field with lower amplitude contributes to the generation of propagating Lamb modes resulting in a small signal-to-noise ratio in the detection of cracks using transmission signals. Using a finite angle of incidence (i.e., an angle > 0°) the fundamental Lamb modes S0 and/or A0 can be excited using the central part of the sound field of the first ultrasonic signal which leads to a significant improvement in the signal-to-noise ratio, thereby extending the overall detection accuracy and the range of defects which are detectable using this method.

The first ultrasonic signal can be an ultrasonic pulse of length Δt₁ in the time-domain having a single frequency f₁. Preferably, both the length Δt₁ and the frequency f₁ are independently tunable and adjustable.

This is based on the additional surprising insight that known crack detection methods use ultrasound pulses created by linear chirp excitation to cover a frequency band wide enough to excite more than one Lamb mode and / or to cover a range of pipeline wall thicknesses. The received signal is therefore very long in the time domain and does not allow for a pulse-echo based crack detection. Moving away from the broad banded linear chirp excitation towards a single-frequency pulse of well-defined length in the time domain addresses and overcomes this issue. In addition, using a single frequency makes it possible to highly selectively excite propagating waves (esp. in the form of fundamental Lamb modes) in the pipeline wall.

The method may further comprise the step of receiving, by the first ultrasonic transducer, a third ultrasonic signal from the surface of the pipeline wall, wherein the third ultrasonic signal is an echo signal originating from the at least one fundamental Lamb mode excited by the first ultrasonic signal and reflected from a defect in the pipeline wall. The step of receiving, by the first ultrasonic transducer, the third ultrasonic signal may be carried out as an alternative step or in addition to the step of receiving, by the second ultrasonic transducer, the second ultrasonic signal from the surface of the pipeline wall. If the step of receiving, by the first ultrasonic transducer, the third ultrasonic signal is carried out as an alternative step to the step of receiving, by the second ultrasonic transducer, the second ultrasonic signal, the second ultrasonic transducer may, in the most basic set-up, be dispensed with, i.e., a set-up in which the first ultrasonic transducer is used to both emit and receive an ultrasonic signal at a finite angle so as to excite a fundamental Lamb wave in the pipeline wall and receive a corresponding echo signal.

The method may further comprise the steps of emitting, by the second ultrasonic transducer, a fourth ultrasonic signal towards the pipeline wall at a finite angle of -α relative to the normal of the pipeline wall, wherein the fourth ultrasonic signal excites at least one fundamental Lamb mode in the pipeline wall; receiving, by the first ultrasonic transducer, a fifth ultrasonic signal from the surface of the pipeline wall, wherein the fifth ultrasonic signal is generated by the at least one fundamental Lamb mode excited by the fourth ultrasonic signal and having propagated within the pipeline wall over the third, finite distance d₃; and / or, receiving, by the second ultrasonic transducer, a sixth ultrasonic signal from the surface of the pipeline wall, wherein the sixth ultrasonic signal is an echo signal generated by the at least one fundamental Lamb mode excited by the fourth ultrasonic signal and reflected from a defect in the pipeline wall.

Preferably, the fourth ultrasonic signal is an ultrasonic pulse of length Δt₄ in the time-domain having a single frequency f4. In a further preferred embodiment, both the length Δt₄ and the frequency f₄ are independently tuneable and adjustable. As pointed out before, the well-defined length of the pulse in the time-domain makes it possible or at least easier to interpret the received transmitted / reflected signals. In addition, using a pulse having a precisely defined frequency makes it possible to excite specific modes and resonances within the pipeline wall.

In a particularly preferred embodiment, the first ultrasonic signal and the fourth ultrasonic signal are not emitted concurrently, but at an adjustable interval between the first ultrasonic signal and the fourth ultrasonic signal so as to allow for a clear separation and distinction of the various response signals in the time domain.

In a particularly preferred embodiment, the third distance d₃ is d₁ - 2*d₂*tan(α).

In another preferred embodiment, the method comprises the step of arranging a third ultrasonic transducer inside the pipeline, wherein the third ultrasonic transducer emits a further ultrasonic signal (preferably in the form of a single-frequency pulse of a defined length in the time domain) at a second, different finite angle α₂ relative to a normal of the pipeline wall configured to excite at least one fundamental Lamb mode in the pipeline wall. In this scenario, the first and / or second transducers may detect response signals originating from the pipeline wall. Alternatively or in addition thereto, the third ultrasonic transducer may receive a further ultrasonic signal at a second, different finite angle α₂ relative to a normal of the pipeline wall originating, e.g., from the first ultrasonic signal and the fundamental Lamb wave it creates in the pipeline wall.

In yet another preferred embodiment, the method further comprises the steps of arranging a third ultrasonic transducer and / or a fourth ultrasonic transducer inside the pipeline, each at a finite stand-off distance d₄ from the pipeline wall, wherein, preferably, the third and fourth transducers are arranged at a finite distance d₅ from each other; emitting, by the third ultrasonic transducer, a seventh ultrasonic signal towards the pipeline wall at a different finite angle α₂ (i.e., different from the angle at which the first ultrasonic signal is emitted) relative to a normal of the pipeline wall, wherein the further ultrasonic signal excites at least one fundamental Lamb mode in the pipeline wall; and receiving, by at least one of the ultrasonic transducers and preferably the fourth ultrasonic transducer, an eighth ultrasonic signal from the surface of the pipeline wall, wherein the eighth ultrasonic signal is generated by the at least one fundamental Lamb mode excited by the seventh ultrasonic signal and having propagated within the pipeline wall over a finite distance d₆ or by the at least one fundamental Lamb mode excited by the first ultrasonic signal. In this embodiment, the first and / or second transducers may additionally receive a respective ultrasonic signal generated by the at least one fundamental Lamb mode excited by the seventh ultrasonic signal.

The distance d₆ can preferably be calculated as d₄ - 2*d₅*tan(α₂). Preferably, the seventh ultrasonic signal is an ultrasonic pulse of adjustable length Δt₇ in the time-domain having an adjustable single frequency f₇.

A second aspect of the present invention relates to a device / pig for inspecting a pipeline wall comprising first and second ultrasonic transducers and, optionally, third and/or fourth ultrasonic transducers being configured to conduct the steps of the method according to the first aspect. To this end, the device may comprise a processor and a memory comprising instructions which, when executed by the processor, control the device to carry out the method steps according to the first aspect.

### Brief description of the figures

Exemplary embodiments of the invention are described below with the help of the following figures:
Figure 1 shows an embodiment of the present invention comprising a first ultrasonic transducer and a second ultrasonic transducer arranged in a pipeline;
Figure 2 shows another embodiment of the present invention comprising two pairs of ultrasonic transducers arranged in a pipeline.

### Detailed description

Embodiments of the claimed invention are described below with reference to the Figures.

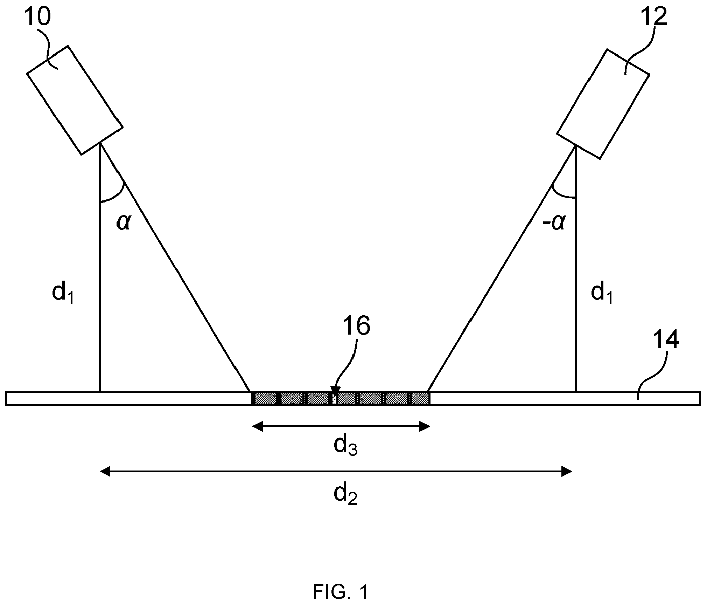

Fig. 1 shows a first embodiment of the present invention comprising a first ultrasonic transducer 10 and a second ultrasonic transducer 12 arranged inside a gas-filled pipeline and being surrounded by a pipeline wall 14 consisting of metal and having a nominally circular cross-section as well as a nominally constant wall thickness. It is worth noting that the present invention is not limited to any particular material or any particular cross-section / wall thickness of the pipeline to be inspected.

As shown in Fig. 1, the first ultrasonic transducer 10 and the second ultrasonic transducer 12 are each arranged at a finite (first) stand-off distance d₁ from the pipeline wall 14 in the direction of a normal of the pipeline wall 14 (i.e., in a radial direction in this particular embodiment). In addition, the first and second transducers 10, 12 are arranged at a second distance d₂ from each other in a plane defined by the normal of the pipeline wall. The stand-off distance is preferably defined by the distance between the pipeline wall 14 and the centre of the surface of each piezoelectric transducer creating the ultrasonic signal, as shown in Fig. 1. The second distance is preferably defined by the distance between the centre of the surface of the first transducer 10 creating / receiving ultrasonic signals and the centre of the surface of the second transducer 12 creating / receiving ultrasonic signals, as is also shown in Fig. 1.

The first and second ultrasonic transducers 10, 12 may form part of an inspection device (not shown) such as a so-called pig comprising a signal controller (not shown) comprising a memory and a processor, wherein the signal controller is operatively coupled with the transducers 10, 12 and configured to control each transducer 10, 12 to emit ultrasonic signals as well as to receive from each transducer 10, 12 signals which correspond to received ultrasonic signals. The inspection device further comprises a power source (not shown) to provide power to the ultrasonic transducers 10, 12, the signal controller as well as other components.

As indicated in Fig. 1, the pipeline wall 14 has a defect 16 in the form of a crack. To detect the presence of this defect and glean further information about it, the first ultrasonic transducer 10 is configured to emit a first ultrasonic signal in the form of an ultrasonic pulse of a controllable length Δt₁ in the time-domain having a single adjustable frequency f₁. The pulse may be a single pulse or may be repeated at predetermined or variable intervals.

The first ultrasonic signal is emitted by the first ultrasonic transducer 10 at an angle *α* relative to the normal of the pipeline wall 14 and then propagates through the gas medium in the pipeline (which can, for instance, be natural gas, hydrogen, air or a mixture thereof) until it is incident on the pipeline wall 14 at an angle of incidence of *α*, thereby exciting at least one fundamental Lamb mode S0, A0 within the pipeline wall 14 by means of the central part of the sound field making up the first ultrasonic signal. In other words, most of the energy inherent in the first ultrasonic signal is used to excite the fundamental Lamb mode(s). The angle *α* and the frequency f₁ can be chosen and adjusted to excite (a) particular fundamental Lamb mode(s).

Having travelled a third distance d₃ within the pipeline wall 14, the Lamb mode excited by the first ultrasonic signal re-emerges from the pipeline wall 14 as a second ultrasonic signal at an angle of -*α* relative to the normal of the pipeline wall, thus spanning an angle of 2*α* between the incident (first) ultrasonic signal and the outgoing second ultrasonic signal.

The third distance d₃ depends on the first and second distances d₁, d₂ as well as the angle *α* and can be calculated as d₃ = d₁ - 2*d₂*tan(*α*).

The second ultrasonic signal subsequently propagates through the gas in the pipeline and is eventually received by the second ultrasonic transducer 12 where it is detected. The detected time response of the ultrasonic transducer 12 may be sent to and displayed on a suitable display device and/or be stored for later retrieval and analysis by means of the signal controller mentioned above.

The second ultrasonic signal is a transmission signal and carries information about whether or not a (or, more precisely, at least one) defect is present in the inspected section of the pipeline wall 14. If there is a defect located in the path of a propagating Lamb wave, the transmitted Lamb wave amplitude drops and the receiving second transducer 12 records this drop in amplitude. Using the method according to the present invention, the signal quality and the signal-to-noise ratio can be improved by at least one order of magnitude compared to a known set-up using normal incidence.

In addition to the detection of cracks and other irregularities (i.e., to understand whether or not there is a defect), the detected second signal can also be used to further analyse certain characteristics of the detected defect 16 such as the orientation, location, dimension or nature of the defect 16 in the pipeline wall 14. The detected second signal may also be used to understand whether more than one defect (not shown) is present.

To further improve the signal-to-noise ratio and the overall detection accuracy, the first ultrasonic transducer 10 can be configured to additionally receive and detect a third ultrasonic signal returned from the surface of the pipeline wall 14, wherein the third ultrasonic signal is an echo signal generated by the at least one fundamental Lamb mode excited by the first ultrasonic signal and reflected from the defect 16 in the pipeline wall 14.

In an alternative embodiment, it is possible to dispense with the second ultrasonic transducer 12 (either physically altogether or at least as far as signal detection is concerned) and simply rely on the detection of the third pulse-echo signal received by the first ultrasonic transducer 10 to detect a flaw / defect 16 in the pipeline wall 14.

In another embodiment, both the first transducer 10 and the second transducer 12 are used as emitters and receivers of ultrasonic signals. To this end, the second ultrasonic transducer 12 is configured to emit a fourth ultrasonic signal towards the pipeline wall 14 at a finite angle of -*α* relative to the normal of the pipeline wall, wherein the fourth ultrasonic signal excites at least one fundamental Lamb mode in the pipeline wall. For instance, if the fourth signal is an ultrasonic pulse of length Δt₄ in the time-domain having a single frequency f4, the angle *α* and the frequency f₄ are chosen such as to ensure that at least one fundamental Lamb mode is excited in the pipeline wall 14.

The first ultrasonic transducer 10 is then configured to receive and detect a fifth ultrasonic signal originating from the surface of the pipeline wall, wherein the fifth ultrasonic signal is generated by the at least one fundamental Lamb mode excited by the fourth ultrasonic signal and having propagated within the pipeline wall over the third, finite distance d₃.

In a particularly preferred embodiment, the second ultrasonic transducer 12 is configured to receive and detect a sixth ultrasonic signal from the surface of the pipeline wall, wherein the sixth ultrasonic signal is an echo signal generated by the at least one fundamental Lamb mode excited by the fourth ultrasonic signal and reflected from the defect 16 in the pipeline wall 14.

In total, in this preferred embodiment, up to two transmission measurements (based on the detected second and fifth ultrasonic signals described above) and two pulse-echo measurements (based on the detected third and sixth ultrasonic signals described above), i.e., up to four measurements are possible and the combination of these measurements not only provides for an improved accuracy in detecting the presence of defects, but also makes it possible to gain additional insight into other characteristics of the defect(s) such as its orientation and location within the pipeline wall 14. Depending on the particular set-up and time constraints as well as, e.g., the material of the pipeline to be inspected or the expected nature of the defects, it may be advantageous to detect and process all or just a subset of these signals. For instance, it may be advantageous to detect and process just one or both of the pulse-echo signals only (i.e., the third and / or sixth ultrasonic signals), whereas in other scenarios it may be advantageous to use the transmission signal created by the first ultrasonic signal (i.e., the second signal) in combination with the pulse-echo signal created by the fourth ultrasonic signal (i.e., the sixth ultrasonic signal). Other combinations are possible.

The signal controller controlling the first and second ultrasonic transducers 10, 12 is preferably configured to cause an adjustable time delay between the first ultrasonic signal and the fourth ultrasonic signal being emitted to avoid interference between the two propagating Lamb modes in the pipeline wall 14 excited by the first and fourth ultrasonic signals. Depending on the specific excitation parameters and especially the frequencies f₁ and f₄, it may also be possible to emit the first and fourth ultrasonic signal essentially concurrently or at least with some temporal overlap to speed up the measurement process.

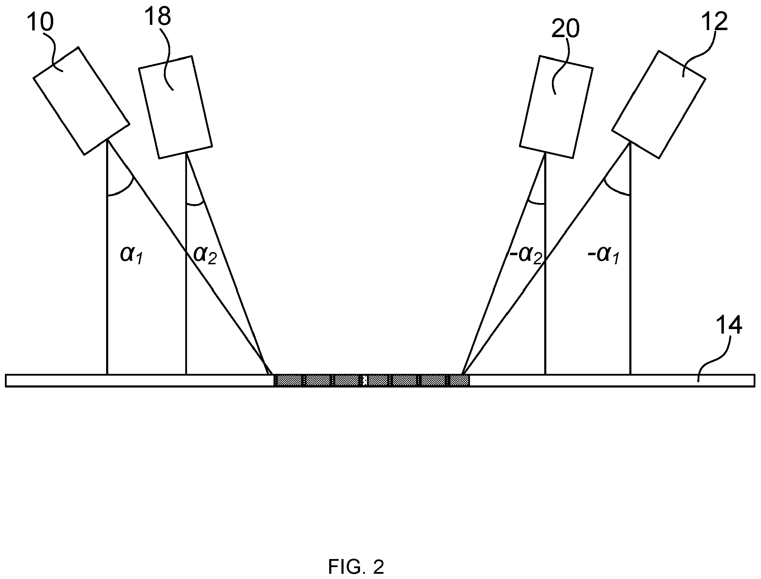

In a further embodiment shown in Fig. 2, a second pair of ultrasonic transducers 18, 20 is added comprising a third ultrasonic transducer 18 and a fourth ultrasonic transducer 20 configured to emit and receive signals at a different, second angle *α*₂ compared to the characteristic angle *α*₁ of the first pair of transducers 10, 12. In other words, the first and second ultrasonic transducers 10, 12 span an angle of 2*α*₁ between them, whereas the third and fourth ultrasonic transducers 18, 20 span an angle of 2*α*₂ between them. The second angle *α*₂ may be larger or smaller than the first angle *α*₁.

As shown in Fig. 2, the first ultrasonic transducer 10 and the second ultrasonic transducer 12 are each arranged at a finite stand-off distance from the pipeline wall 14 in the direction of a normal of the pipeline wall 14 (i.e., in a radial direction in case of a circular cross-section). In addition, the first and second transducers 10, 12 are arranged at a distance from each other in a plane defined by the normal of the pipeline wall. Both distances are preferably defined by the distance between the pipeline wall 14 and the centre of the surface of each transducer creating the ultrasonic signal. Similarly, the third ultrasonic transducer 18 and the fourth ultrasonic transducer 20 are each arranged at a finite stand-off distance from the pipeline wall 14 in the direction of a normal of the pipeline wall 14 (i.e., in a radial direction in case of a circular cross-section), wherein the stand-off distance of the second pair of transducers 18, 20 may be different from or identical to the stand-off distance of the first pair of transducers 10, 12. In addition, as shown in Fig. 2, the third and fourth transducers 18, 20 are arranged at a distance from each other in a plane defined by the normal of the pipeline wall. The stand-off distances mentioned above are preferably defined by the distance between the pipeline wall 14 and the centre of the surface of each transducer creating / receiving ultrasonic signals. The second distances are preferably defined by the distance between the centres of the 'active' surfaces of the (preferably piezoelectric) transducers of each pair.

In this embodiment, all the transducers 10, 12, 18, 20 may be arranged on an inspection device (not shown) such as a so-called pig comprising a signal controller having a processor and a memory (not shown) being operatively coupled with the transducers 10, 12, 18, 20 and configured to control each transducer 10, 12, 18, 20 to emit ultrasonic signals as well as to receive from each transducer 10, 12, 18, 20 signals which correspond to received ultrasonic signals. The inspection device may further comprise a power source to provide power to the ultrasonic transducers 10, 12, the signal controller as well as other components.

Preferably, single frequency pulses, each having an adjustable frequency and adjustable length Δt, are used to excite particular Lamb modes within the pipeline wall, wherein both transmission and/or echo signals are being picked up by the transducers 10, 12, 18, 20. For instance, when the first ultrasonic transducer is emitting a single frequency pulse, transmission response signals can be picked up by the second transducer 12 and the fourth transducer 20, whereas reflection / echo signals can be picked up by the first transducer 10 itself and the third transducer 18. As described above, the signal controller with which all the transducers 10, 12, 18, 20 are operatively coupled controls the transducers 10, 12, 18, 20 to ensure that the signals are emitted and received at appropriate times and that the received signals are being displayed, forwarded, and/or stored for further analysis.

Having a second pair of transducers 18, 20 being configured to emit / receive ultrasonic signals at a second, different angle *α*₂ means that additional insights can be obtained by emitting ultrasound signals (preferably each in the form of an adjustable single-frequency pulse of adjustable length Δt), from one, several or even all the transducers 10, 12, 18, 20, preferably in a staggered, time-delayed fashion so as to avoid interferences and overlap of signals, and receiving ultrasound response signals (either by transmission or reflection) by one, several or even all the transducers 10, 12, 18, 20.

By detecting the transmission and/or pulse-echo response signals by one, several or all the transducers, a tailored detection program can be run depending on the required inspection accuracy and speed. For instance, the first and third transducers 10, 18 may be controlled, by the signal controller, to emit single frequency pulses at appropriate frequencies, having desired lengths Δt as well as a suitable gap in the time domain between them so as to be able to clearly detect and identify the response signals pertaining to each pulse. Response signals may, in this particular example, be detected by all the transducer 10, 12, 18, 20 or, alternatively, just a subset of the transducers 10, 12, 18, 20 depending on the particular requirements and boundary conditions.
First ultrasonic transducer 10
Second ultrasonic transducer 12
Pipeline wall 14
Defect / crack 16
Third ultrasonic transducer 18
Fourth ultrasonic transducer 20

## Claims

1. A method for detecting a defect in a pipeline wall (14), comprising the steps of
arranging a first ultrasonic transducer (10) and a second ultrasonic transducer (12) inside a pipeline, each at a finite stand-off distance d₁ from the pipeline wall (14), wherein the first and second transducers (10, 12) are arranged at a second distance d₂ from each other;
emitting, by the first ultrasonic transducer (10), a first ultrasonic signal towards the pipeline wall (14) at a finite angle α relative to a normal of the pipeline wall (14), wherein the first ultrasonic signal excites at least one fundamental Lamb mode in the pipeline wall (14); and
receiving, by the second ultrasonic transducer (12), a second ultrasonic signal from the surface of the pipeline wall (14), wherein the second ultrasonic signal is generated by the at least one fundamental Lamb mode excited by the first ultrasonic signal and having propagated within the pipeline wall (14) over a finite third distance d3.

2. The method according to claim 1, wherein the first ultrasonic signal is an ultrasonic pulse of length Δt₁ in the time-domain having a single frequency f₁.

3. The method according to claim 1 or 2, wherein the stand-off distance d₁ is measured along the direction of the normal of the pipeline wall (14) and wherein the second distance d₂ is measured in a plane defined by the normal of the pipeline wall.

4. The method according to one of the preceding claims, further comprising the step of receiving, by the first ultrasonic transducer (10), a third ultrasonic signal from the surface of the pipeline wall (12), wherein the third ultrasonic signal is an echo signal generated by the at least one fundamental Lamb mode excited by the first ultrasonic signal and reflected from a defect (16) in the pipeline wall (14).

5. The method according to one of the preceding claims, further comprising the steps of emitting, by the second ultrasonic transducer (12), a fourth ultrasonic signal towards the pipeline wall (14) at a finite angle of -α relative to the normal of the pipeline wall (14), wherein the fourth ultrasonic signal excites at least one fundamental Lamb mode in the pipeline wall (14); and
receiving, by the first ultrasonic transducer (10), a fifth ultrasonic signal from the surface of the pipeline wall (14), wherein the fifth ultrasonic signal is generated by the at least one fundamental Lamb mode excited by the fourth ultrasonic signal and having propagated within the pipeline wall (14) over the third, finite distance d₃.

6. The method according to claim 5, further comprising the step of
receiving, by the second ultrasonic transducer (12), a sixth ultrasonic signal from the surface of the pipeline wall (14), wherein the sixth ultrasonic signal is an echo signal generated by the at least one fundamental Lamb mode excited by the fourth ultrasonic signal and reflected from a defect (16) in the pipeline wall (14).

7. The method according to claim 5 or 6, wherein the fourth ultrasonic signal is an ultrasonic pulse of length Δt₄ in the time-domain having a single frequency f₄.

8. The method according to one of the preceding claims, wherein the third distance d3 is d₁ - 2*d₂*tan(α).

9. The method according to one of the preceding claims, further comprising the steps of
arranging a third ultrasonic transducer (18) inside the pipeline;
emitting or receiving, by the third ultrasonic transducer (18), a further ultrasonic signal at a second, different finite angle α₂ relative to a normal of the pipeline wall (14).

10. The method according to one of claims 1 to 8, further comprising the steps of
arranging a third ultrasonic transducer (18) and a fourth ultrasonic transducer (20) inside the pipeline, each at a finite stand-off distance d₄ from the pipeline wall (14), wherein the third and fourth transducers (10, 12) are arranged at a finite distance d₅ from each other;
emitting, by the third ultrasonic transducer (18), a seventh ultrasonic signal towards the pipeline wall (14) at a different finite angle α₂ relative to a normal of the pipeline wall (14), wherein the seventh ultrasonic signal excites at least one fundamental Lamb mode in the pipeline wall (14); and
receiving, by the fourth ultrasonic transducer (20), an eighth ultrasonic signal from the surface of the pipeline wall (14), wherein the eighth ultrasonic signal is generated by the at least one fundamental Lamb mode excited by the seventh ultrasonic signal and having propagated within the pipeline wall (14) over a finite distance d₆ or by the at least one fundamental Lamb mode excited by the first ultrasonic signal.

11. A pipeline inspection device comprising
a first ultrasonic transducer (10) and a second ultrasonic transducer (12);
a signal controller being operatively coupled with the ultrasonic transducers (10, 12) and configured to control each transducer (10, 12) to emit ultrasonic signals and configured to receive signals from each transducer (10, 12) which correspond to ultrasonic signals received by the respective transducer (10, 12);
wherein the pipeline inspection device is adapted to carry out the method according to one of claims 1 to 8.

12. The pipeline inspection device according to claim 11, further comprising
a third ultrasonic transducer (18) and / or a fourth ultrasonic transducer (20) being operatively coupled with the signal controller, wherein the signal controller is configured to control each ultrasonic transducer to emit and / or receive ultrasonic signals;
wherein the pipeline inspection device is adapted to carry out the method according to one of claims 1 to 10.
